# EUROPÄISCHE PATENTSCHRIFT

(11) **EP 4 300 935 B1**
(45) Veröffentlichungstag und Bekanntmachung des Hinweises auf die Patenterteilung: **12.06.2024**
(21) Anmeldenummer: 22181466.8
(22) Anmeldetag: 28.06.2022
(51) Int. Cl.: H04N 23/56, B23Q 17/24, G03B 15/05

(54) **BELEUCHTUNGSVORRICHTUNG ZUR ERZEUGUNG EINES BELEUCHTUNGSFELDES FÜR EINE KAMERA**
LIGHTING DEVICE FOR GENERATING A LIGHTING FIELD FOR A CAMERA
DISPOSITIF D'ÉCLAIRAGE DESTINÉ À LA GÉNÉRATION D'UN CHAMP D'ÉCLAIRAGE POUR UNE CAMÉRA

(43) Veröffentlichungstag der Anmeldung: 03.01.2024
(73) Patentinhaber: SICK AG, 79183 Waldkirch (DE)
(72) Erfinder: Strohmeier, Dirk, 79312 Emmendingen (DE); Steinkogler, Sascha, 79106 Freiburg (DE); Steiert, Mirco, 79856 Hinterzarten (DE); Hahn, Daniel, 78549 Spaichingen (DE)

(56) Entgegenhaltungen:
- EP-A1- 2 075 630
- US-A- 5 818 528
- US-A1- 2001 028 559
- US-A1- 2012 261 472
- US-A1- 2015 049 239

## Beschreibung

Die Erfindung betrifft eine Beleuchtungsvorrichtung zur Erzeugung eines Beleuchtungsfeldes für eine Kamera sowie ein Herstellungsverfahren für eine Beleuchtungsvorrichtung nach dem Oberbegriff von Anspruch 1 beziehungsweise 11.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Kamera ist vielfach Teil eines komplexen Sensorsystems. Beispielsweise ist es bei Lesetunneln an Förderbändern üblich, eine Vielzahl von kamerabasierten Codelesern einerseits nebeneinander zur Abdeckung einer größeren Förderbandbreite und andererseits aus unterschiedlichen Perspektiven zu montieren, um Objekte von mehreren Seiten aufzunehmen. Weiterhin wird oftmals die Geometrie der geförderten Objekte vorab mit einem gesonderten Laserscanner vermessen, um daraus Fokusinformationen, Auslösezeitpunkte, Bildbereiche mit Objekten und dergleichen zu bestimmen.

Kameras und Kamerasysteme benötigen eine Beleuchtung, um die zu inspizierenden oder zu vermessenden Objekte beziehungsweise den zu lesenden Code unabhängig von Umgebungs- oder Fremdlicht erfassen zu können. Als Lichtquellen werden dabei häufig LEDs verwendet. Im Vergleich zu den ebenfalls gelegentlich verwendeten Laserlichtquellen haben LEDs meist eine divergentere Abstrahlcharakteristik und größere Abstrahlflächen. Um deren Licht dennoch gezielt auf das Beleuchtungsfeld zu führen, werden entsprechende Optiken verwendet.

Für eine gute Signalqualität, d.h. in erster Linie ein ausreichendes Signal-Rausch-Verhältnis, ist eine starke und möglichst homogene Beleuchtung erforderlich. Dabei besteht ein gewisses Spannungsverhältnis zwischen Homogenität und Effizienz, zwischen denen ein annehmbarer Kompromiss gefunden werden muss. Da Kameras in einer großen Variantenvielfalt gebraucht werden, die sich in Eigenschaften wie der Auflösung des Bildsensors, in Sichtfeld und Arbeitsabstand differenzieren, besteht ebenso ein Bedarf an unterschiedlichen Beleuchtungen.

Bisher wurden hier sogenannte TIR-Linsen (Total Internal Reflection) eingesetzt. Eine TIR-Linse weist eine Geometrie auf, die dafür sorgt, dass das eingetretene Licht in hinreichend flachem Winkel auf die Seitenflächen fällt, um die für das Linsenmaterial geltenden Bedingungen für Totalreflexion zu erfüllen. Dadurch wird das Licht ähnlich wie in einem Lichtleiter geführt. Beispielsweise offenbart die DE 10 2008 014 349 B4 einen optischen Sensor mit einer Sendeoptik, in deren Konzentrator eine Lichtführung durch Totalreflexion an der Mantelfläche erfolgt. Aus der DE 10 2013 108 800 A1 ist eine Beleuchtungsvorrichtung zum Erzeugen eines Beleuchtungsfeldes bekannt, die das Licht ihrer Lichtquelle mittels einer TIR-Linse gezielt in das Beleuchtungsfeld führt. TIR-Linsen können aber zu baugroß, teuer, toleranzanfällig und unflexibel werden.

In der EP 2 136 248 A1 wird eine Bildaufnahmevorrichtung mit einer anpassbaren Beleuchtung aus mehreren Lichtquellen beschrieben. In einer Ausführungsform sind drei Strahlformungsoptikgruppen für die Objektbeleuchtung alternierend in einer Kreisbahn um eine Empfangsoptik angeordnet. Durch Verdrehen der Objektivbeleuchtung kann unter diesen Strahlformungsoptikgruppen die für eine jeweils eingesetzte Empfangsoptik passende ausgewählt werden, indem sie in Deckung mit den Lichtquellen gebracht wird. Die einzelnen Strahlformungsoptiken werden aber nicht genauer beschrieben.

Die EP 2 136 248 A1 befasst sich mit einer Zeilenkamera mit einem Doppelzeilenempfänger und zwei Beleuchtungsmodulen, die alternierend aktiviert werden, um den Erfassungsbereich aus unterschiedlichen Perspektiven und möglicherweise auch in unterschiedlichen Farben zu beleuchten. Erneut wird auf keine detaillierten Eigenschaften der Sendeoptiken eingegangen.

Aus der US 2001/0028559 A1 ist eine Beleuchtungsvorrichtung beziehungsweise ein Blitzlicht für eine Kamera bekannt. Sie verwendet einen Reflektor, um nach hinten abgestrahlte Lichtanteile nach vorne zu werfen. Dort sind zwei durchsichtige optische Elemente vorgesehen. Das erste optische Element teilt den Lichtfluss auf mehrere optische Pfade auf. Das zweite optische Element ist eine Mehrfachlinse, um für eine Strahlformung der jeweiligen optischen Pfade zu sorgen.

Die EP 2 075 630 A1 offenbart eine mittels Flüssiglinse anpassbare Beleuchtungsvorrichtung. In einer Ausführungsform wird der Flüssiglinse noch ein Reflektor vorgeordnet, der als Konzentrator auf die Flüssiglinse fungiert.

In der US 2012/0261472 A1 wird eine Beleuchtungsvorrichtung für einen kamerabasierten Codeleser vorgestellt, die eine Vielzahl von ringförmig angeordneten Lichtsendern in einem Gehäusegrundteil und einen dazu drehbeweglich gelagerten Gehäuseaufsatz mit zugehörigen Sendeoptiken aufweist. Durch Drehbewegung wird der jeweilige Abstand zwischen Lichtsender und Sendeoptik verändert.

Die US 5 818 528 befasst sich mit einem handgehaltenen Codeleser, der eine ringförmige Beleuchtung aufweist.

Es ist daher Aufgabe der Erfindung, die Beleuchtung für eine Kamera weiter zu verbessern.

Diese Aufgabe wird durch eine Beleuchtungsvorrichtung zur Erzeugung eines Beleuchtungsfeldes für eine Kamera sowie ein Herstellungsverfahren für eine Beleuchtungsvorrichtung nach Anspruch 1 beziehungsweise 11 gelöst. Die Beleuchtungsvorrichtung erzeugt Sendelicht mit mindestens einem Lichtsender, vorzugsweise einer LED oder einer Laserdiode. Ein dem Lichtsender zugeordneter Reflektorkegel richtet das womöglich ursprünglich noch mit höherer Divergenz abgestrahlte Sendelicht nach vorne hin aus. Der Lichtsender ist dafür vorzugsweise in der Kegelspitze oder an einer Öffnung der Kegelspitze angeordnet, und Sendelicht wird von dem Reflektorkegel ein- oder mehrfach nach vorne zur Grundfläche des Kegels hin gespiegelt, soweit es nicht ohnehin schon nach vorne gerichtet ist. Die innere Mantelfläche des Reflektorkegels ist verspiegelt, das Sendelicht wird somit reflektiert und nicht wie in einer TIR-Linse durch Totalreflexion geführt.

Die Erfindung geht von dem Grundgedanken aus, in dem Reflektorkegel eine Sendelinse unterzubringen, die für eine Strahlformung auf einen vorgegebenen Beleuchtungswinkel des Beleuchtungsfeldes sorgt. Diese Sendelinse ist an der der Kegelspitze gegenüberliegenden Grundfläche des Reflektorkegels angeordnet. Vorzugsweise schließt die Sendelinse die Grundfläche ab, wobei sie durch Toleranzen oder sonstige, beispielsweise konstruktive Gründe nicht notwendig bündig abschließt und somit sowohl in den Reflektorkegel eintauchen als auch zumindest ein wenig herausragen kann. Reflektorkegel und Sendelinse bilden gemeinsam eine Beleuchtungsoptik, wobei der Reflektorkegel das Sendelicht nach vorne wirft und die Sendelinse das Strahlenbündel des Sendelichts entsprechend dem vorgegebenen Beleuchtungswinkel weiter formt.

Die Erfindung hat den Vorteil, dass eine besonders helle, lichtstarke Beleuchtung ermöglicht wird. Es kann eine große Anzahl von Lichtsendern vorgesehen werden, um die Lichtstärke noch zu erhöhen. Dennoch bleibt die Bauform kompakt. Dabei ist ein guter Kompromiss zwischen Homogenität und Effizienz gefunden. Die Beleuchtung ist wenig anfällig gegenüber Toleranzen und bietet so eine noch bessere Leistung. Wie später noch genauer erläutert, kann derselbe Reflektorkegel mit unterschiedlichen Sendelinsen verbunden werden, um dadurch die Variantenbildung zu erleichtern, was wiederum den Aufwand in Entwicklung, Produktion und Verwaltung reduziert.

Der Reflektorkegel ist bevorzugt aus Metall oder beschichtetem Kunststoff hergestellt. Das lässt sich leicht in die erforderliche Form bringen und hat die erforderlichen Spiegeleigenschaften. Auch eine Metalloberfläche kann zusätzlich bearbeitet beziehungsweise beschichtet werden.

Die Beleuchtungsvorrichtung weist bevorzugt eine Vielzahl ringförmig angeordneter Lichtsender mit jeweils einem zugeordneten Reflektorkegel mit innen verspiegelter Mantelfläche und einer an dessen Grundfläche angeordneten Sendelinse auf. Es gibt demnach bevorzugt gleich viele Lichtsender, Reflektorkegel und Sendelinsen. Jeweils ein Lichtsender mit zugeordnetem Reflektorkegel samt Sendelinse können als ein Beleuchtungselement aufgefasst werden. Entsprechend bilden die Reflektorkegel und Sendelinsen gemeinsam die Beleuchtungsoptik für die Vielzahl von Lichtsendern. Die Beleuchtungselemente werden in dieser Ausführungsform ringförmig angeordnet, und zwar in einem Ring oder mehreren konzentrischen Ringen. Durch das Zentrum des Rings oder der Ringe verläuft vorzugsweise die optische Achse des Empfangspfads der Kamera, deren Sichtfeld somit optimal ausgeleuchtet werden kann.

Die Beleuchtungsvorrichtung weist bevorzugt ein Reflektorbasiselement mit mindestens einer darin angebrachten Ringanordnung von Reflektorkegeln auf. Dabei ist das Reflektorbasiselement vorzugsweise selbst ringförmig beziehungsweise kreisförmig ausgebildet. Die Reflektorkegel bilden auf diese Weise ein kompaktes, gut handhabbares gemeinsames Bauteil. Sie werden beispielsweise als kegelförmige Aussparungen in dem Reflektorbasiselement angebracht. Die Anordnung der Reflektorkegel zu mindestens einem Kreis oder Ring ist vorzugsweise gleichmäßig. Es sind aber auch unterschiedliche Abstände in mehreren Ringen und sonstige Unregelmäßigkeiten oder Lücken denkbar.

Das Reflektorbasiselement weist bevorzugt jeweils in radialer Richtung zwei nebeneinanderliegende Reflektorkegel auf. Die Reflektorkegel sind somit in radialer Richtung paarweise vorgesehen und bilden damit insgesamt einen Doppelring, ohne damit mehr als zwei Ringe auszuschließen. Zwischen den beiden Reflektorkegeln eines radial nebeneinander liegenden Paares kann eine Zwischenwand vorgesehen sein, oder beide Reflektorkegel gehen ohne Zwischenwand ineinander über. Obwohl ein regelmäßiger, durchgehender Doppelring bevorzugt ist, kann es Abweichungen geben, beispielsweise Stellen, in denen ein Reflektorkegel ohne Partner bleibt.

In den mindestens einen Reflektorkegel ist bevorzugt wahlweise eine Sendelinse mit einem anderen vorgegebenen Beleuchtungswinkel einsetzbar. Derselbe Reflektorkegel kann somit durch Kombination mit einer anderen Sendelinse eine Beleuchtungsoptik für ein Beleuchtungsfeld mit einem anderen Beleuchtungswinkel bilden. Die Beleuchtungsvorrichtung ist damit Teil einer Familie von Beleuchtungsvorrichtungen oder aus einer Beleuchtungsplattform entstanden. Es können ohne zusätzlichen Entwicklungsaufwand und mit äußerst wenig Zusatzaufwand in der Herstellung Varianten gebildet oder sogar Umrüstungen vorgenommen werden. Sofern eine Vielzahl von Sendelinsen in einer Anordnung einer Vielzahl von Beleuchtungselementen zum Einsatz kommt, muss nicht zwingend jede einzelne Sendelinse den Beleuchtungswinkel erzeugen, sondern dies kann erst durch die Überlagerung der einzelnen Beleuchtungsfelder der beteiligten Sendelinsen erfolgen.

Die mindestens eine Sendelinse ist bevorzugt aus Kunststoff hergestellt, insbesondere als Spritzgussteil aus PMMA (Polymethylmethacrylat). Das ermöglicht eine kostengünstige Herstellung, die zugleich flexibel ist, um Sendelinsen für unterschiedliche Beleuchtungswinkel zu erhalten.

Die Sendelinse weist bevorzugt eine die Innenkontur des Reflektorkegels füllende Form auf. Für die Strahlformung genügt eine Sendelinse mit Material im Bereich der Grundfläche des Reflektoregels. Wenn aber die Sendelinse den Reflektorkegel füllt, so ergibt sich eine bessere Passform bei weniger Toleranzen, somit ein robusterer und einfacherer Aufbau.

Die mindestens eine Sendelinse ist als Doppellinse mit einer ersten Linse und einer damit verbundenen zweiten Linse ausgebildet. Durch solche Doppellinsen oder Linsendoubletten sind weniger Einzelteile zu entwerfen, herzustellen und miteinander zu verbinden. Der Gesamtaufbau der Beleuchtungsvorrichtung wird vereinfacht, und es gibt weniger Quellen für mögliche störende Toleranzen.

Die Beleuchtungsvorrichtung weist eine Vielzahl ringförmig angeordneter Sendelinsen auf, wobei die Doppellinsen jeweils mit der Verbindungslinie zwischen erster Linse und zweiter Linse radial angeordnet sind. Die Doppellinsen werden also quer zur Umfangsrichtung zu einem Doppelring angeordnet, wobei jeweils ein Winkelsegment beider Ringe von einer Doppellinse abgedeckt wird. Besonders bevorzugt wird dazu das oben erläuterte Reflektorbasiselement mit jeweiligen Paaren von zwei in radialer Richtung nebeneinanderliegenden Reflektorkegeln verwendet. Es wäre grundsätzlich alternativ denkbar, die Doppellinsen statt radial in Umfangsrichtung anzuordnen und so einen einzigen Ring aus im Vergleich zu Einzellinsen nur halb so vielen Einzelteilen zu bilden.

Die Beleuchtungsvorrichtung weist bevorzugt eine Vielzahl von Lichtsendern auf, die in mehreren Beleuchtungssträngen, insbesondere zwei oder vier Beleuchtungssträngen, miteinander verschaltet sind, wobei die Beleuchtungsstränge einzeln aktivierbar sind. Das hat einmal den Vorteil, dass nicht zu viele Lichtsender zugleich über denselben Strang versorgt werden müssen. Indem die Beleuchtungsstränge einzelnen aktivierbar sind, können zudem unterschiedliche Beleuchtungsszenarien verwirklicht werden.

Vorzugsweise ist ein erster Beleuchtungsstrang der linken Hälfte und ein zweiter Beleuchtungsstrang der rechten Hälfte der Beleuchtungsvorrichtung zugeordnet. Dadurch kann das Beleuchtungsfeld wahlweise von der einen Seite, der anderen Seite oder beiden Seiten erzeugt werden. In einer weiteren Ausführungsform sind vorzugsweise vier Beleuchtungsstränge jeweils einem Viertel der Beleuchtungsvorrichtung zugeordnet, womit zahlreiche weitere Beleuchtungsperspektiven entstehen. Die Aufteilung der Beleuchtungsvorrichtung ist besonders anschaulich für eine Ringanordnung, wobei dann jeweils ein Beleuchtungsstrang einem 180°-Segment beziehungsweise einem 90°-Segment des Rings zugeordnet ist. Denkbar ist auch, in einer Anordnung als Doppelring oder Mehrfachring die Ringe unterschiedlichen Beleuchtungssträngen zuzuordnen, wobei dies auch mit einer Segmentierung der Ringe kombinierbar ist. In einer weiteren Alternative sind die Lichtsender eines jeweiligen Beleuchtungsstrangs über den gesamten Ring verteilt, beispielsweise in alternierend ineinander verschachtelten Beleuchtungssträngen. Dann kann durch Aktivierung eines oder mehrerer Beleuchtungsstränge im Wesentlichen nur die Leistung variiert werden und dabei das Beleuchtungsszenario hinsichtlich der Perspektive weitgehend beibehalten bleiben. Sind Sendelinsen für unterschiedliche Beleuchtungswinkel verbaut, insbesondere ein Ring für einen kleineren und ein weiterer Ring für einen größeren Beleuchtungswinkel, so können gleiche Beleuchtungswinkel jeweils in Beleuchtungssträngen gebündelt werden, und so kann durch entsprechende Aktivierung von Beleuchtungssträngen auch der Beleuchtungswinkel variiert werden.

Die Lichtsender und/oder ihnen nachgeordnete optische Elemente in einem Beleuchtungsstrang erzeugen bevorzugt Sendelicht mit anderen Polarisationseigenschaften und/oder spektralen Eigenschaften als in einem anderen Beleuchtungsstrang. Die unterschiedlichen Polarisationseigenschaften beziehungsweise spektralen Eigenschaften können unmittelbar vom Lichtsender erzeugt werden, beispielsweise durch verschiedenfarbige LEDs, oder es werden Farbfilter beziehungsweise Polarisationsfilter nachgeordnet, insbesondere in Form entsprechender Ausprägungen oder Beschichtungen der jeweiligen Sendelinse. Durch gezielte Aktivierung bestimmter Beleuchtungsstränge kann in dieser Ausführungsform ein Beleuchtungsfeld einer gewünschten Polarisation und/oder Farbe erzeugt werden. Diese Lichteigenschaften des Beleuchtungsfeldes sind mit den im Vorabsatz erläuterten geometrischen Eigenschaften kombinierbar.

In bevorzugter Weiterbildung ist eine Kamera, insbesondere ein kamerabasierter Codeleser oder eine Kamera zur Inspektion oder Vermessung von Objekten vorgesehen, die einen Bildsensor zur Aufnahme von Bilddaten, eine Steuer- und Auswertungseinheit zum Lesen von Codes oder Bestimmen von Objekteigenschaften aus den Bilddaten und eine Ausführungsform der erfindungsgemäßen Beleuchtungsvorrichtung aufweist. Das Sichtfeld der Kamera entspricht vorzugsweise dem Beleuchtungsfeld der Beleuchtungsvorrichtung, wobei zum Ausgleich von Toleranzen das Beleuchtungsfeld etwas größer sein kann. Den Bildauswertungen beziehungsweise dem Codelesen können Mehrfachaufnahmen bei unterschiedlichen Beleuchtungsszenarien durch Aktivierung bestimmter Beleuchtungsstränge zugrunde gelegt werden. Die Steuer- und Auswertungseinheit kann Teil der Kamera oder als Steuerungsgerät daran angeschlossen sein. Diese Funktionalität kann weiterhin über Kamera, Beleuchtungsvorrichtung und/oder externes Steuerungsgerät verteilt sein.

Bei dem erfindungsgemäßen Herstellungsverfahren für eine Beleuchtungsvorrichtung wird mindestens ein Lichtsender an oder in der Spitze eines dem Lichtsender zugeordneten Reflektorkegels mit innen verspiegelter Mantelfläche angeordnet. Es wird eine Auswahl von unterschiedlichen, für dieselbe Bauform des Reflektorkegels passende Sendelinsen für verschiedene Beleuchtungswinkel der Beleuchtungsvorrichtung vorgehalten und zur Herstellung einer Beleuchtungsvorrichtung für ein Beleuchtungsfeld des bestimmten Beleuchtungswinkels eine Sendelinse des bestimmten Beleuchtungswinkels aus der Auswahl entnommen und in dem Reflektorkegel an dessen Grundfläche angeordnet. Die Lichtsender und Reflektorkegel bilden eine Art Beleuchtungsplattform, die durch Kombination mit unterschiedlichen Sendelinsen sehr einfach für verschiedene Beleuchtungsfelder und insbesondere Beleuchtungswinkel angepasst werden können. Auf diese Weise sind insbesondere die verschiedenen Ausführungsformen der erfindungsgemäßen Beleuchtungsvorrichtung realisierbar.

Vorzugsweise wird eine Vielzahl von Sendelinsen des bestimmten Beleuchtungswinkels in ein Reflektorbasiselement mit mindestens einer darin angebrachten Ringanordnung von Reflektorkegeln angeordnet. Es entsteht so auf einfache Weise eine lichtstarke Beleuchtungsvorrichtung in Ringanordnung der einzelnen Beleuchtungselemente eines gewünschten Beleuchtungswinkels.

Die Sendelinsen werden als Doppellinsen mit jeweils einer ersten Linse und einer damit verbundenen zweiten Linse hergestellt, und die Doppellinsen werden jeweils mit der Verbindungslinie zwischen erster Linse und zweiter Linse radial in ein Reflektorbasiselement mit jeweils zwei in radialer Richtung nebeneinanderliegenden Reflektorkegeln angeordnet. Dadurch entsteht mit weniger Einzelteilen und folglich weniger Aufwand und Toleranzen eine Beleuchtungsvorrichtung mit einer Anordnung der Beleuchtungselemente in einem Doppelring.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einer Beleuchtungsvorrichtung;
- Fig. 2: eine Draufsicht auf eine Beleuchtungsvorrichtung mit ringförmig angeordneten Beleuchtungselementen;
- Fig. 3a: eine Darstellung einer Sendelinse für einen mittleren Beleuchtungswinkel;
- Fig. 3b: ein beispielhafter Strahlverlauf des Sendelichts bei Verwendung der Sendelinse gemäß Figur 3a;
- Fig. 4a: eine Darstellung einer Sendelinse für einen größeren Beleuchtungswinkel;
- Fig. 4b: ein beispielhafter Strahlverlauf des Sendelichts bei Verwendung der Sendelinse gemäß Figur 4a;
- Fig. 5a: eine Darstellung einer Sendelinse für einen kleineren Beleuchtungswinkel;
- Fig. 5b: ein beispielhafter Strahlverlauf des Sendelichts bei Verwendung der Sendelinse gemäß Figur 5a;
- Fig. 6a: eine Darstellung einer Doppellinse als Sendelinse für den mittleren Beleuchtungswinkel entsprechend Figur 3a-b;
- Fig. 6b: eine Darstellung einer Doppellinse als Sendelinse für den größeren Beleuchtungswinkel entsprechend Figur 4a-b;
- Fig. 7: eine dreidimensionale Darstellung eines Reflektorbasiselements mit radial benachbarten Paaren von Reflektorkegeln sowie einer ringförmigen Anordnung darin unterzubringender Doppellinsen;
- Fig. 8: ein Doppelring von Beleuchtungselementen, der nach Einsetzen der Doppellinsen in das Reflektorbasiselement gemäß Figur 7 entsteht;
- Fig. 9: eine schematische Darstellung der Verschaltung von Lichtquellen in mehreren Beleuchtungssträngen; und
- Fig. 10: eine dreidimensionale Ansicht der beispielhaften Anwendung einer Kamera mit einer Beleuchtungsvorrichtung in Montage an einem Förderband.

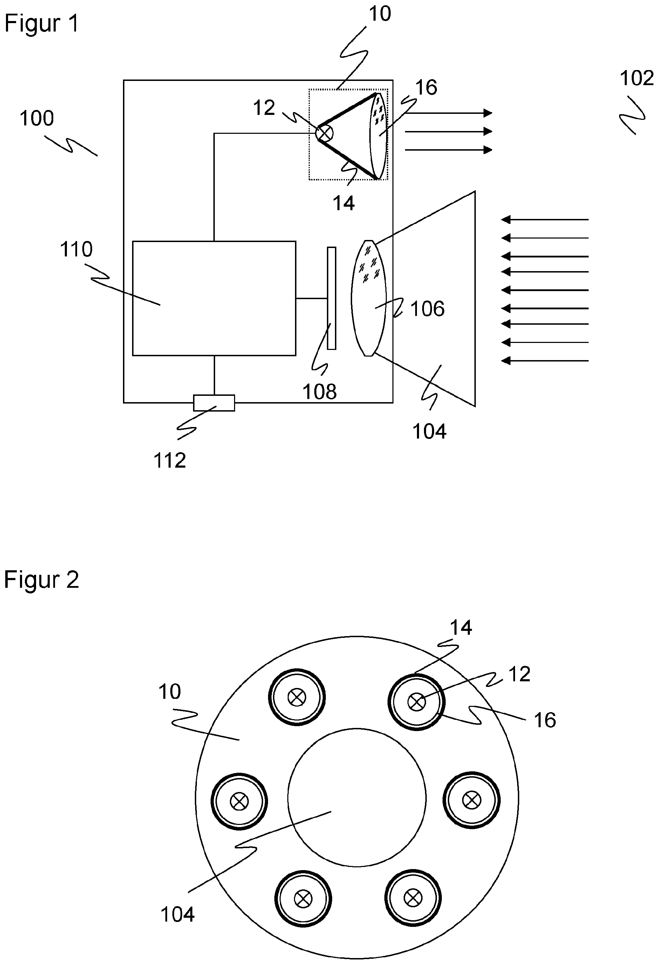

Figur 1 zeigt eine schematische Schnittdarstellung einer Beleuchtungsvorrichtung 10 in einer Kamera 100. Alternativ zu einer integrierten Beleuchtungsvorrichtung 10 ist eine externe Beleuchtungsvorrichtung denkbar. Die Kamera 100 kann beispielsweise zur Vermessung oder Inspektion von Objekten sowie zum Erfassen von Codes und Auslesen von deren Inhalt eingesetzt werden.

Die Kamera 100 erfasst Licht aus einem Aufnahmebereich 102 durch ein Aufnahmeobjektiv 104, das durch nur eine dargestellte Empfangslinse 106 stellvertretend auch für komplexere Aufnahmeobjektive 104 mit anderen optischen Elementen wie Blenden, Prismen und dergleichen repräsentiert ist. Ein Bildsensor 108, beispielsweise ein CCD-oder CMOS-Chip mit einer Vielzahl von zu einer Zeile oder einer Matrix angeordneten Pixelelementen, erzeugt Bilddaten des Aufnahmebereichs 102 und der dort gegebenenfalls vorhandenen Objekte und Codebereiche. Eine Steuer- und Auswertungseinheit 110 ist mit der Beleuchtungsvorrichtung 10 und dem Bildsensor 108 verbunden und für die Steuerungs-, Auswertungs- und sonstigen Koordinierungsaufgaben in der Kamera 100 zuständig, wie das Beleuchten des Aufnahmebereichs 102 und das Einlesen von Bilddaten von dem Bildsensor 108. Die Steuer- und Auswertungseinheit 110 ist auf einem oder mehreren digitalen Bausteinen implementiert, beispielsweise Mikroprozessoren, ASICs, FPGAs oder dergleichen, die auch ganz oder teilweise außerhalb der Kamera 100 vorgesehen sein können. Vorzugsweise ist die Steuer- und Auswertungseinheit 110 in der Lage, Codebereiche in den Bilddaten aufzufinden und zu decodieren, womit die Kamera 100 zu einem kamerabasierten Codeleser wird. An einem Ausgang 112 der Kamera 100 können Daten ausgegeben werden, und zwar sowohl Auswertungsergebnisse, wie gelesene Codeinformationen oder ermittelte Abmessungen und Inspektionsergebnisse, als auch Daten in verschiedenen Verarbeitungsstufen, wie Rohbilddaten, vorverarbeitete Bilddaten, identifizierte Objekte oder noch nicht decodierte Codebilddaten.

Die Beleuchtungsvorrichtung 10 weist einen Lichtsender 12 als Lichtquelle, einen Reflektorkegel 14 und eine Sendelinse 16 auf. Als Lichtsender 12 können insbesondere Halbleiterbauteile wie eine LED oder eine Laserdiode eingesetzt werden. Der Lichtsender 12 ist an der Spitze des Reflektorkegels 14 angeordnet. Abweichend von der Darstellung kann der Lichtsender 12 außerhalb des Reflektorkegels 14 an beziehungsweise in einer Öffnung in dessen Spitze angeordnet sein. Der Reflektorkegel 14 sorgt dafür, dass auch seitliche Anteile des ursprünglich mit recht hoher Divergenz abgestrahlten Sendelichts durch einfache oder mehrfache Reflexion nach vorne in Richtung der Grundfläche des Reflektorkegels 14 und damit der Sendelinse 16 gebracht werden. Dafür ist der Reflektorkegel 14 innen verspiegelt, beispielsweise als Metallteil mit spiegelnder Oberfläche oder als entsprechend beschichtetes Kunststoffteil. Die Sendelinse 16 formt das Sendelicht entsprechend dem gewünschten Beleuchtungsfeld und insbesondere Beleuchtungswinkel. Als Sendelinse 16 wird vorzugsweise ein Spritzgussteil aus Kunststoff eingesetzt, beispielsweise aus PMMA (Polymethylmethacrylat). Die Beleuchtungsvorrichtung 10 ist in Figur 1 insbesondere hinsichtlich ihrer Platzierung und Ausgestaltung nur rein schematisch gezeigt. Insbesondere werden bevorzugt eine Vielzahl von Lichtsendern 12 mit zugehörigen Beleuchtungsoptiken aus jeweiligem Reflektorkegel 14 und Sendelinse 16 um das Aufnahmeobjektiv 104 herum angeordnet. Die Beleuchtungsvorrichtung 10 wird nun unter Bezugnahme auf die Figuren 2 bis 9 detailliert erläutert.

Figur 2 zeigt eine Draufsicht auf eine Beleuchtungsvorrichtung 10 mit einer Vielzahl ringförmig angeordneter Beleuchtungselemente, wobei ein jeweiliges Beleuchtungselement einen Lichtsender 12, einen Reflektorkegel 14 und eine Sendelinse 16 aufweist. Die Darstellung ist hinsichtlich der Anzahl Beleuchtungselemente und deren Anordnung auf dem Ring rein beispielhaft, wobei eine gleichmäßige Verteilung über den Ring wie gezeigt bevorzugt ist. Wie später noch erläutert, gibt es erfindungsgemäß einen Doppelring von Beleuchtungselementen. Das Zentrum der Beleuchtungsvorrichtung 10 bleibt vorzugsweise frei, und hier wird der Empfangspfad mit dem Aufnahmeobjektiv 104 untergebracht.

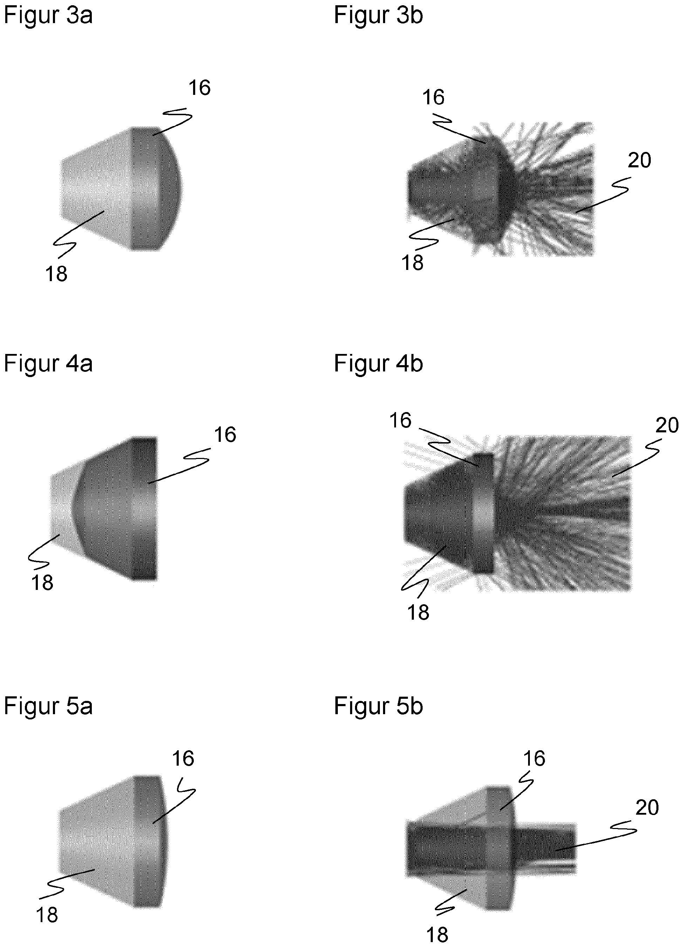

Die Figuren 3a, 4a und 5a zeigen verschiedene Ausgestaltungen der Sendelinse 16 für einen mittleren Beleuchtungswinkel von 31°, einen größeren Beleuchtungswinkel von 47° und einen kleineren Beleuchtungswinkel von 21°. Die Sendelinsen 16 bilden eine Auswahl oder Familie von Sendelinsen für unterschiedliche Beleuchtungswinkel, die wahlweise in den Reflektorkegel 14 eingesetzt werden können. Damit wird ein Plattformgedanke verfolgt, bei dem die Funktionen der Reflexion nach vorne durch den Reflektorkegel 14 und die Strahlformung zum Definieren des Beleuchtungswinkels durch die Sendelinse 16 voneinander separierter sind. Um die Beleuchtungsvorrichtung 10 für einen bestimmten Beleuchtungswinkel auszurüsten, werden die passenden Sendelinsen 16 verwendet beziehungsweise damit die vorhandenen Sendelinsen 16 ausgetauscht, der Reflektorkegel 14 bleibt derselbe oder wenigstens baugleich. Die Sendelinsen 16 weisen vorzugsweise neben dem eigentlich wirksamen Linsenabschnitt noch einen unteren Abschnitt 18 auf, der die Sendelinse 16 zu einer Kegelform ergänzt. Dadurch bleibt die äußere Geometrie der Sendelinsen 16 trotz unterschiedlicher Beleuchtungswinkel gleich, und die Sendelinsen 16 können mit geringeren Toleranzen in den Reflektorkegel 14 eingesetzt werden. Alternativ kann der entsprechend hell dargestellte Abschnitt 18 frei bleiben und die entsprechende gezeigte Schattierung lediglich als Andeutung der Kegelkontur des zugehörigen Reflektorkegels 14 verstanden werden.

Die Figuren 3b, 4b und 5b zeigen die Sendelinsen 16 ergänzend mit beispielhaften zugehörigen Strahlverläufen 20 entsprechend den Beleuchtungswinkeln von 31°, 47° und 21°. Die Beleuchtungswinkel entsprechen vorzugsweise dem Aufnahmebereich 102 (FOV, Field of View), wobei eine gewisse Toleranzmarge vorgesehen sein kann.

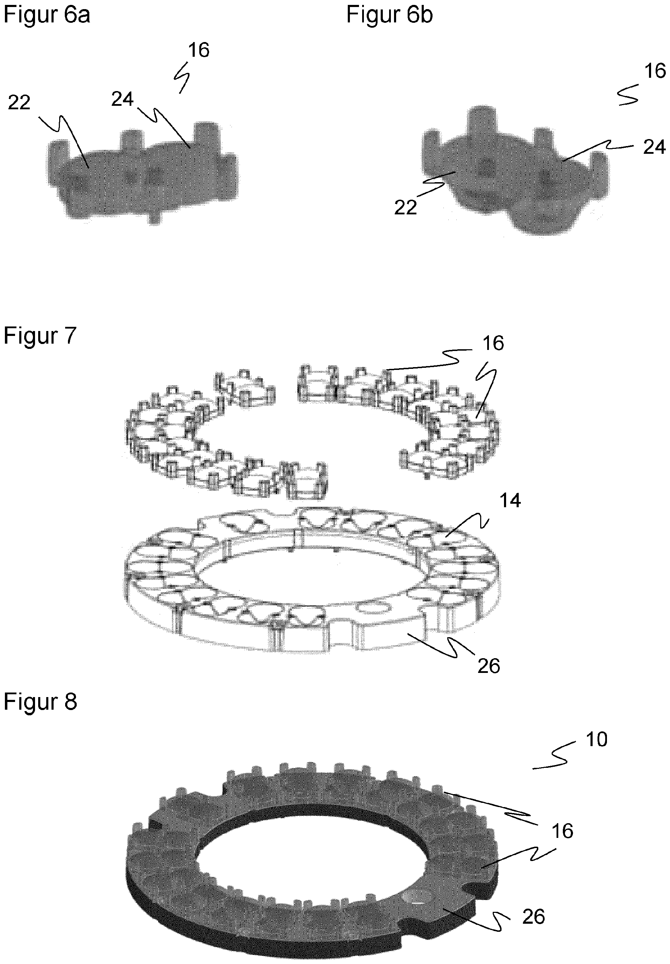

Die Figuren 6a-b zeigen weitere Sendelinsen 16 in einer Ausführungsform als Doppellinse mit einer jeweiligen ersten Linse 22 und zweiten Linse 24. Dabei erzeugt die Sendelinse 16 gemäß Figur 6a den mittleren Beleuchtungswinkel von 31° entsprechend Figur 3a-b und die Sendelinse 16 gemäß Figur 6b den größeren Beleuchtungswinkel von 47° entsprechend Figur 4a-b. Eine weitere nicht gezeigte Doppellinse für den kleineren Beleuchtungswinkel von 21° entsprechend 5a-b ist ebenfalls möglich, die konkreten Beleuchtungswinkel sind ohnehin nur beispielhaft zu verstehen. Es kann eine hohe Homogenität von ±20° um den Mittelwert des Lichtfeldes im Aufnahmebereich 102 erzielt werden. Durch die Doppellinsen oder Linsendoublets werden Toleranzen sowie die Anzahl der Einzelteile reduziert.

Figur 7 zeigt eine dreidimensionale Darstellung eines Reflektorbasiselements 26 mit radial benachbarten Paaren von Reflektorkegeln 14 sowie darüber rein beispielhaft siebzehn zu einem Ring angeordneter darin unterzubringender Sendelinsen 16, die entsprechend Figur 6a-b als Doppellinsen ausgestaltet sind. Das Reflektorbasiselement 26 vereinfacht die Anordnung einer Vielzahl von Reflektorkegeln 14 in eine gewünschte Anordnung wie eine einfache oder mehrfache vorzugsweise konzentrische Ringanordnung. Mit den dargestellten radialen Nachbarpaaren von Reflektorkegeln 14 entsteht ein Doppelring. Dabei gibt es vorzugsweise eine Zwischenwand innerhalb eines Paares von Reflektorkegeln 14. Die Sendelinsen 16 werden passend angeordnet, so dass die Verbindungslinie zwischen erster Linse 22 und zweiter Linse 24 radial ausgerichtet ist. Nicht gezeigt beziehungsweise in oder unter dem Reflektorbasiselement 26 verborgen ist eine zugehörige Anzahl von in diesem Falle zweimal siebzehn Lichtsendern 12. Figur 8 zeigt ergänzend die Beleuchtungsvorrichtung 10 in der Ausführungsform als Doppelring von Beleuchtungselementen, der nach dem Zusammensetzen der Sendelinsen 16 und des Reflektorbasiselements 26 gemäß Figur 7 entsteht.

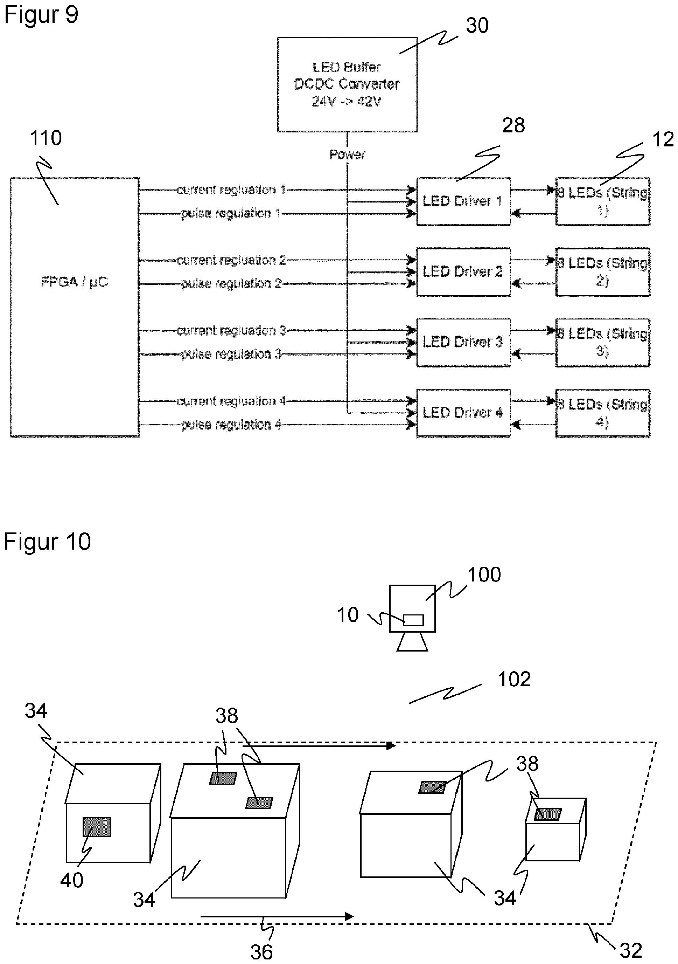

Figur 9 zeigt eine schematische Darstellung der Verschaltung einer Vielzahl von Lichtsendern 12 in mehreren, hier beispielhaft vier Beleuchtungssträngen. Jeder Beleuchtungsstrang weist eine eigene Treiberschaltung 28 auf, die wiederum von der Steuer- und Auswertungseinheit 110 oder alternativ zumindest teilweise von einer zusätzlichen, nicht gezeigten Beleuchtungssteuerung angesteuert werden. Die Treiberschaltungen 28 sind mit einer Versorgung 30 verbunden und ermöglichen es, Teilgruppen der Lichtsender 12 einzeln zu aktivieren. Die Aufteilung in vier Teilgruppen oder Beleuchtungsstränge mit je acht Lichtsendern 12 ist ebenso wie die Gesamtzahl der Lichtsender 12 rein beispielhaft zu verstehen.

Durch die Beleuchtungsstränge ist zum einen das Leistungsmanagement vereinfacht, denn die gemeinsame Versorgung einer großen Anzahl von Lichtsendern 12 könnte andernfalls zu Problemen führen. Außerdem ermöglicht die gezielte Aktivierung bestimmter Beleuchtungsstränge die Aufnahme von Bildern unter verschiedenen Beleuchtungsszenarien. Variiert werden können verschiedene Aspekte der Beleuchtung einzeln oder in Kombination. Zunächst wird durch Aktivierung einer kleineren oder größeren Anzahl von Beleuchtungssträngen eine geringere oder erhöhte Beleuchtungsstärke erreicht. Dann sind die Lichtsender 12 der jeweiligen Beleuchtungsstränge geometrisch verteilt, so dass Beleuchtungen aus unterschiedlichen Richtungen oder Perspektiven ermöglicht werden. Beispielsweise können Lichtsender 12 entsprechend den zwei Hälften oder den vier Vierteln einer Ringanordnung und/oder den unterschiedlichen Ringen aufgeteilt und so unterschiedlichen Beleuchtungssträngen zugeordnet werden. Schließlich können sich die Lichtsender 12 der Beleuchtungsstränge in dem Licht unterscheiden, das sie erzeugen, insbesondere im Hinblick auf Polarisation und Farbe. Dadurch sind auch Beleuchtungsszenarien mit unterschiedlichen Polarisationseigenschaften und spektralen Eigenschaften durch Aktivierung der entsprechenden Beleuchtungsstränge möglich.

Figur 10 zeigt eine mögliche Anwendung der Kamera 100 mit Beleuchtungsvorrichtung 10 in Montage an einem Förderband 32. Die Kamera 100 und die Beleuchtungsvorrichtung 10 werden hier nur noch als Symbol und nicht mehr mit ihrem bereits erläuterten Aufbau gezeigt. Das Förderband 32 fördert Objekte 34, wie durch den Pfeil 36 angedeutet, durch den Aufnahmebereich 102 der Kamera 100. Es können beliebige optisch erfassbare Eigenschaften der Objekte 34 aufgenommen und ausgewertet werden. In einer besonders bevorzugten Anwendung des Codelesens tragen die Objekte 34 an ihren Außenflächen Codebereiche 38. Aufgabe der Kamera 100 ist dann, die Codebereiche 38 zu erkennen, die dort angebrachten Codes auszulesen, zu dekodieren und dem jeweils zugehörigen Objekt 34 zuzuordnen. Um auch Objektseiten und insbesondere seitlich angebrachte Codebereiche 40 zu erfassen, werden vorzugsweise zusätzliche, nicht dargestellte Kameras aus unterschiedlicher Perspektive eingesetzt. Außerdem können mehrere Kameras nebeneinander angeordnet werden, um gemeinsam einen breiteren Aufnahmebereich 102 abzudecken.

## Patentansprüche

1. Beleuchtungsvorrichtung (10) zur Erzeugung eines Beleuchtungsfeldes für eine Kamera (100), wobei die Beleuchtungsvorrichtung (10) mindestens einen Lichtsender (12) und einen dem Lichtsender (12) zugeordneten Reflektorkegel (14) mit innen verspiegelter Mantelfläche aufweist, wobei in dem Reflektorkegel (14) an dessen Grundfläche eine Sendelinse (16) angeordnet ist, um ein Beleuchtungsfeld eines vorgegebenen Beleuchtungswinkels zu erzeugen, **dadurch gekennzeichnet,**
**dass** die Beleuchtungsvorrichtung (10) eine Vielzahl ringförmig angeordneter Sendelinsen (16) aufweist, die jeweils als Doppellinse mit einer ersten Linse (22) und einer damit verbundenen zweiten Linse (24) ausgebildet sind, und dass die Doppellinsen jeweils mit der Verbindungslinie zwischen erster Linse (22) und zweiter Linse (24) radial angeordnet sind und einen Doppelring bilden.

2. Beleuchtungsvorrichtung (10) nach Anspruch 1,
wobei der Reflektorkegel (14) aus Metall oder beschichtetem Kunststoff hergestellt ist.

3. Beleuchtungsvorrichtung (10) nach Anspruch 1 oder 2,
die eine Vielzahl ringförmig angeordneter Lichtsender (12) mit jeweils einem zugeordneten Reflektorkegel (14) mit innen verspiegelter Mantelfläche und einer an dessen Grundfläche angeordneten Sendelinse (16) aufweist.

4. Beleuchtungsvorrichtung (10) nach einem der vorhergehenden Ansprüche,
die ein Reflektorbasiselement (26) mit mindestens einer darin angebrachten Ringanordnung von Reflektorkegeln (14) aufweist.

5. Beleuchtungsvorrichtung (10) nach Anspruch 4,
wobei das Reflektorbasiselement (26) jeweils in radialer Richtung zwei nebeneinanderliegende Reflektorkegel (14) aufweist.

6. Beleuchtungsvorrichtung (10) nach einem der vorhergehenden Ansprüche,
wobei in den mindestens einen Reflektorkegel (14) wahlweise eine Sendelinse (16) mit einem anderen vorgegebenen Beleuchtungswinkel einsetzbar ist.

7. Beleuchtungsvorrichtung (10) nach einem der vorhergehenden Ansprüche,
wobei die mindestens eine Sendelinse (16) aus Kunststoff hergestellt ist, insbesondere als Spritzgussteil aus PMMA
und/oder wobei die Sendelinse (16) eine die Innenkontur des Reflektorkegels (14) füllende Form (18) aufweist.

8. Beleuchtungsvorrichtung (10) nach einem der vorhergehenden Ansprüche, die eine Vielzahl von Lichtsendern (12) aufweist, die in mehreren Beleuchtungssträngen, insbesondere zwei oder vier Beleuchtungssträngen, miteinander verschaltet sind, wobei die Beleuchtungsstränge einzeln aktivierbar sind.

9. Beleuchtungsvorrichtung (10) nach Anspruch 8,
wobei ein erster Beleuchtungsstrang der linken Hälfte und ein zweiter Beleuchtungsstrang der rechten Hälfte der Beleuchtungsvorrichtung (10) zugeordnet ist, oder wobei vier Beleuchtungsstränge jeweils einem Viertel der Beleuchtungsvorrichtung (10) zugeordnet sind
und/oder wobei die Lichtsender (12) und/oder ihnen nachgeordnete optische Elemente in einem Beleuchtungsstrang Sendelicht mit anderen Polarisationseigenschaften und/oder spektralen Eigenschaften erzeugen als in einem anderen Beleuchtungsstrang.

10. Kamera (100), insbesondere kamerabasierter Codeleser oder Kamera zur Inspektion oder Vermessung von Objekten, mit einem Bildsensor (108) zur Aufnahme von Bilddaten, einer Steuer- und Auswertungseinheit (110) zum Lesen von Codes (38) oder Bestimmen von Objekteigenschaften aus den Bilddaten und einer Beleuchtungsvorrichtung (10) nach einem der vorhergehenden Ansprüche.

11. Verfahren zu Herstellung einer Beleuchtungsvorrichtung (10), insbesondere einer Beleuchtungsvorrichtung (10) nach einem der vorhergehenden Ansprüche, bei dem mindestens ein Lichtsender (12) an oder in der Spitze eines dem Lichtsender (12) zugeordneten Reflektorkegels (14) mit innen verspiegelter Mantelfläche angeordnet wird,
**dadurch gekennzeichnet,**
**dass** eine Auswahl von unterschiedlichen, für dieselbe Bauform des Reflektorkegels (14) passende Sendelinsen (16) für verschiedene Beleuchtungswinkel der Beleuchtungsvorrichtung (10) vorgehalten wird und dass zur Herstellung einer Beleuchtungsvorrichtung (10) für ein Beleuchtungsfeld des bestimmten Beleuchtungswinkels eine Sendelinse (16) des bestimmten Beleuchtungswinkels aus der Auswahl entnommen und in dem Reflektorkegel (14) an dessen Grundfläche angeordnet wird und dass die Sendelinsen (16) als Doppellinsen mit jeweils einer ersten Linse (22) und einer damit verbundenen zweiten Linse (24) hergestellt werden und die Doppellinsen jeweils mit der Verbindungslinie zwischen erster Linse (22) und zweiter Linse (24) radial in ein Reflektorbasiselement (26) mit jeweils zwei in radialer Richtung nebeneinanderliegenden Reflektorkegeln (14) angeordnet werden und einen Doppelring bilden.

12. Verfahren nach Anspruch 11,
wobei eine Vielzahl von Sendelinsen (16) des bestimmten Beleuchtungswinkels in ein Reflektorbasiselement (26) mit mindestens einer darin angebrachten Ringanordnung von Reflektorkegeln (14) angeordnet wird.

## Claims

1. An illumination device (10) for generating an illumination field for a camera (100), the illumination device (10) comprising at least one light transmitter (12) and a reflector cone (14) that is assigned to the light transmitter (12) and has an internally mirrored surface area, a transmitting lens (16) being arranged in the reflector cone (14) on the base area thereof in order to generate an illumination field of a predetermined illumination angle,
**characterized in that** the illumination device (10) comprises a plurality of annularly arranged transmitting lenses (16) that are each configured as a double lens having a first lens (22) and a second lens (24) connected thereto, and **in that** the double lenses are each arranged radially with regard to the connecting line between the first lens (22) and the second lens (24) and form a double ring.

2. The illumination device (10) according to claim 1,
wherein the reflector cone (14) is made of metal or coated plastic.

3. The illumination device (10) according to claim 1 or 2,
comprising a plurality of annularly arranged light transmitters (12), each having an associated reflector cone (14) with an internally mirrored surface area and a transmitting lens (16) arranged on the base area thereof.

4. The illumination device (10) according to any of the preceding claims, comprising a reflector base element (26) with at least one ring arrangement of reflector cones (14) mounted therein.

5. The illumination device (10) according to claim 4,
wherein the reflector base element (26) comprises two adjacent reflector cones (14) in the radial direction.

6. The illumination device (10) according to any of the preceding claims,
wherein a transmitting lens (16) with a different predetermined illumination angle can be inserted into the at least one reflector cone (14).

7. The illumination device (10) according to any of the preceding claims,
wherein the at least one transmitting lens (16) is made of plastic, in particular as an injection-molded part made of PMMA
and/or wherein the transmitting lens (16) comprises a shape (18) filling the inner contour of the reflector cone (14).

8. The illumination device (10) according to any of the preceding claims, comprising a plurality of light transmitters (12) which are interconnected in a plurality of illumination strings, in particular two or four illumination strings, wherein the illumination strings can be activated individually.

9. The illumination device (10) according to claim 8,
wherein a first illumination string is assigned to the left half and a second illumination string is assigned to the right half of the illumination device (10), or wherein four illumination strings are each assigned to one quarter of the illumination device (10)
and/or wherein the light transmitters (12) and/or downstream optical elements generate transmitted light with different polarization properties and/or spectral properties in one illumination string than in another illumination string.

10. A camera (100), in particular camera-based code reader or camera for inspecting or measuring objects, comprising an image sensor (108) for recording image data, a control and evaluation unit (110) for reading codes (38) or determining object properties from the image data, and an illumination device (10) according to any of the preceding claims.

11. A method for manufacturing an illumination device (10), in particular an illumination device (10) according to any of the preceding claims, wherein at least one light transmitter (12) is arranged on or in the tip of a reflector cone (14) assigned to the light transmitter (12) and having an internally mirrored circumferential surface,
**characterized in that** a selection of different transmitting lenses (16) suitable for the same design of the reflector cone (14) is provided for different illumination angles of the illumination device (10) and **in that**, in order to manufacture an illumination device (10) for an illumination field of the specific illumination angle, a transmitting lens (16) of the specific illumination angle is taken from the selection and arranged in the reflector cone (14) at the base area thereof, and **in that** the transmitting lenses (16) are manufactured as double lenses each having a first lens (22) and a second lens (24) connected thereto, and the double lenses are each arranged radially with respect to the connecting line between the first lens (22) and the second lens (24) in a reflector base element (26) having two radially adjacent reflector cones (14) and form a double ring.

12. The method according to claim 11,
wherein a plurality of transmitting lenses (16) of the determined illumination angle are arranged in a reflector base element (26) comprising at least one ring arrangement of reflector cones (14) mounted therein.

## Revendications

1. Dispositif d'éclairage (10) destiné à générer un champ d'éclairage pour une caméra (100), le dispositif d'éclairage (10) comprenant au moins un émetteur de lumière (12) et un cône réflecteur (14) associé à l'émetteur de lumière (12) et présentant une surface enveloppe spéculaire à l'intérieur, une lentille émettrice (16) étant disposée dans le cône réflecteur (14) sur sa surface de base, afin de générer un champ d'éclairage d'un angle d'éclairage prédéterminé,
**caractérisé en ce que**
le dispositif d'éclairage (10) comprend une pluralité de lentilles émettrices (12) disposées en forme d'anneau, qui sont chacune réalisées sous forme de double lentille ayant une première lentille (22) et une deuxième lentille (24) reliée à celle-ci, et
**en ce que** les doubles lentilles sont chacune disposées radialement avec leur ligne de liaison entre la première lentille (22) et la deuxième lentille (22) et forment un double anneau.

2. Dispositif d'éclairage (10) selon la revendication 1,
dans lequel le cône réflecteur (14) est fabriqué en métal ou en matière plastique revêtue.

3. Dispositif d'éclairage (10) selon la revendication 1 ou 2,
comprenant une pluralité d'émetteurs de lumière (12) disposés en forme d'anneau, ayant chacun un cône réflecteur (14) associé présentant une surface enveloppe spéculaire à l'intérieur et une lentille émettrice (16) disposée sur sa surface de base.

4. Dispositif d'éclairage (10) selon l'une des revendications précédentes, comprenant un élément de base réflecteur (26) dans lequel est monté au moins un ensemble annulaire de cônes réflecteurs (14).

5. Dispositif d'éclairage (10) selon la revendication 4,
dans lequel l'élément de base réflecteur (26) comprend deux cônes réflecteurs (14) juxtaposés dans la direction radiale.

6. Dispositif d'éclairage (10) selon l'une des revendications précédentes,
dans lequel une lentille émettrice (16) présentant un autre angle d'éclairage prédéterminé peut être insérée au choix dans ledit au moins un cône réflecteur (14).

7. Dispositif d'éclairage (10) selon l'une des revendications précédentes,
dans lequel ladite au moins une lentille émettrice (16) est fabriquée en matière plastique, en particulier sous forme de pièce moulée par injection en PMMA,
et/ou la lentille émettrice (16) présente une forme (18) remplissant le contour intérieur du cône réflecteur (14).

8. Dispositif d'éclairage (10) selon l'une des revendications précédentes, comprenant une pluralité d'émetteurs de lumière (12) interconnectés en plusieurs tronçons d'éclairage, en particulier en deux ou quatre tronçons d'éclairage, les tronçons d'éclairage pouvant être activés individuellement.

9. Dispositif d'éclairage (10) selon la revendication 8,
dans lequel un premier tronçon d'éclairage est associé à la moitié gauche et un deuxième tronçon d'éclairage est associé à la moitié droite du dispositif d'éclairage (10), ou
quatre tronçons d'éclairage sont associés chacun à un quart du dispositif d'éclairage (10),
et/ou les émetteurs de lumière (12) et/ou des éléments optiques disposés en aval de ceux-ci produisent, dans un tronçon d'éclairage, une lumière d'émission ayant des propriétés de polarisation et/ou des propriétés spectrales différentes de celles d'un autre tronçon d'éclairage.

10. Caméra (100), en particulier lecteur de code, basé sur une caméra, ou caméra pour l'inspection ou pour la mesure d'objets, comprenant un capteur d'image (108) destiné à enregistrer des données d'image, une unité de commande et d'évaluation (110) destinée à lire des codes (38) ou à déterminer des propriétés d'objets à partir des données d'image, et un dispositif d'éclairage (10) selon l'une des revendications précédentes.

11. Procédé de fabrication d'un dispositif d'éclairage (10), en particulier d'un dispositif d'éclairage (10) selon l'une des revendications précédentes, dans lequel au moins un émetteur de lumière (12) est disposé sur ou dans le sommet d'un cône réflecteur (14) associé à l'émetteur de lumière (12) et présentant une surface enveloppe spéculaire à l'intérieur,
**caractérisé en ce que**
il est prévu une variété de différentes lentilles émettrices (16) qui conviennent pour la même forme de construction du cône réflecteur (14), pour différents angles d'éclairage du dispositif d'éclairage (10), et
**en ce que** pour la fabrication d'un dispositif d'éclairage (10) pour un champ d'éclairage de l'angle d'éclairage déterminé, une lentille émettrice (16) de l'angle d'éclairage déterminé est prélevée de ladite variété et est disposée dans le cône réflecteur (14) sur sa surface de base, et
**en ce que** les lentilles émettrices (16) sont fabriquées sous forme de doubles lentilles ayant chacune une première lentille (22) et une deuxième lentille (24) reliée à celle-ci, et les doubles lentilles sont chacune disposées avec leur ligne de liaison entre la première lentille (22) et la deuxième lentille (24) radialement dans un élément de base de réflecteur (26), ayant deux cônes réflecteurs (14) juxtaposés dans la direction radiale, et forment un double anneau.

12. Procédé selon la revendication 11,
dans lequel une pluralité de lentilles émettrices (16) de l'angle d'éclairage déterminé sont disposées dans un élément de base de réflecteur (26) dans lequel est monté au moins un ensemble annulaire de cônes réflecteurs (14).
